# FASCICULE DE BREVET EUROPEEN

(11) **EP 3 139 485 B1**
(45) Date de publication et mention de la délivrance du brevet: **15.09.2021**
(21) Numéro de dépôt: 16177770.1
(22) Date de dépôt: 04.07.2016
(51) Int. Cl.: H02P 1/42

(54) **SYSTEME DE DEMARRAGE PROGRESSIF D'UN MOTEUR ELECTRIQUE**
PROGRESSIVES ANLASSVERFAHREN EINES ELEKTROMOTORS
SOFT STARTING SYSTEM FOR AN ELECTRICAL MOTOR

(30) Priorité: 04.09.2015 FR 1558204
(43) Date de publication de la demande: 08.03.2017
(73) Titulaire: Schneider Electric Industries SAS, 92500 Rueil-Malmaison (FR)
(72) Inventeur: DENTELLA, Alain, 38140 BEAUCROISSANT (FR); PENKOV, Delcho, 38400 SAINT MARTIN D'HERES (FR)
(74) Mandataire: Mouney, Jérôme

(56) Documents cités:
- CN-B- 102 185 543
- FR-A1- 2 980 058
- George Templeton Thyristor: "AN1048/D RC Snubber Networks For Thyristor Power Control and Transient Suppression", , 19 juin 2008 (2008-06-19), XP055267533, Extrait de l'Internet: URL:http://www.onsemi.com/pub_link/Collate ral/AN1048-D.PDF [extrait le 2016-04-21]
- None

## Description

### Domaine technique de l'invention

La présente invention se rapporte au démarrage d'un moteur électrique réalisé à l'aide d'un système de démarrage progressif. Elle s'applique à des moteurs alimentés par des réseaux électriques alternatifs haute tension, mais également par des réseaux électriques basse tension. Dans le présent document, le terme «haute tension» couvre les domaines de la Moyenne Tension (MT) et de la Haute Tension A (HTA), c'est-à-dire typiquement des tensions comprises entre 1000 Volts et 50kVolts.

### Etat de la technique

Lors du démarrage d'un moteur électrique, celui-ci réalise un appel de courant sur le réseau électrique qui l'alimente. Il peut s'ensuivre une baisse de la tension du réseau provoquant des dysfonctionnements de certaines charges sensibles, et le cas échéant des délestages sur le réseau.

Pour éviter ce problème, il est connu de connecter le moteur sur le réseau électrique via un système de démarrage progressif, également connu sous le nom de démarreur ou «soft-starter», qui permet d'élever progressivement la valeur de la tension efficace appliquée au moteur durant la phase de démarrage, en commandant des interrupteurs électroniques de puissance interposés entre le moteur et la source d'alimentation électrique. Ces interrupteurs électroniques, qui comprennent généralement des thyristors, sont fragiles et sensibles aux tensions et courants transitoires auxquels ils sont soumis lors des commutations. En particulier, lorsque l'ordre de fermeture d'un thyristor n'est pas fait à un moment approprié, cela peut entraîner à la longue une casse ou une usure prématurée de ce thyristor. C'est pourquoi il convient notamment de les commander au moment où la tension aux bornes de l'interrupteur est minimale.

Pour démarrer un moteur électrique de façon progressive, le document FR2980058 décrit déjà un procédé de commande d'un interrupteur électronique de puissance, lequel est composé de deux thyristors montés tête-bêche, avec en parallèle un circuit d'amortissement de type RC appelé également «snubber». Dans ce document, à partir d'une évaluation de la tension aux bornes de l'interrupteur, le procédé permet de déterminer une plage temporelle de fermeture de l'interrupteur durant laquelle la tension est minimisée, afin de préserver la fiabilité et la durabilité des thyristors. En particulier, on choisit une plage temporelle qui correspond aux alternances négatives de la composante alternative de la tension aux bornes de l'interrupteur commandé.

Le document XP055267533 (G.Templeton "AN1048/D RC snubber networks for thyristor power control and transient suppression") traite aussi du fonctionnement de snubbers pour la commande de puissance par thyristors.

Mesurer la tension transitoire aux bornes d'un interrupteur électronique nécessite cependant un traitement du signal assez sophistiqué, notamment un échantillonnage à fréquence élevée, afin de détecter les minima de tensions. Par ailleurs, cela complexifie la conception de l'armoire du système de démarrage progressif, et donc en augmente le coût.

C'est pourquoi, pour déterminer une plage temporelle adéquate pour la fermeture des thyristors d'un interrupteur électronique, il est préférable de mesurer la dérivée du courant circulant aux bornes de l'interrupteur. En effet, après l'ouverture d'un interrupteur électronique, la dérivée du courant transitoire aux bornes de l'interrupteur, c'est-à-dire du courant transitoire amorti circulant dans le snubber, est l'image opposée de la tension transitoire aux bornes de l'interrupteur. La dérivée du courant peut donc être utilisée pour synchroniser la commutation de l'interrupteur à commander. On détecte donc les passages à zéro, autrement dit les changements de signe, de la dérivée du courant transitoire aux bornes de l'interrupteur quand les thyristors de l'interrupteur ne sont pas conducteurs, ce qui va donner la fréquence d'oscillation de ce courant transitoire.

Pour mesurer la dérivée du courant circulant aux bornes d'un interrupteur, on utilise un capteur tel que par exemple un tore de Rogowski qui présente l'avantage de délivrer un signal avec un délai négligeable de l'ordre de la microseconde et non affecté par la fréquence du courant dans le spectre des fréquences transitoires rencontrées en pratique (c'est-à-dire de l'ordre de 1 à 5 kHz).

Cependant, l'environnement dans lequel se trouve le ou les capteurs est un environnement qui comporte d'importants champs électriques (isolation électrique) et/ou magnétiques (câbles de puissance du moteur). Ces champs entraînent de fortes harmoniques et de hautes fréquences (lors de la commutation des thyristors) qui induisent des perturbations électromagnétiques (CEM) sur les signaux électriques analogiques de mesure issus du ou des capteurs et qui sont destinés au circuit électronique de commande du démarreur.

C'est particulièrement vrai pour des moteurs alimentés par un réseau électrique haute tension et dont les tensions nominales sont supérieures à 1000 V, voire supérieures à 5,5 kV, du fait des fortes valeurs des tensions et des courants transitoires auxquels sont soumis les interrupteurs commandés dans ces cas, mais cela peut s'appliquer également pour des moteurs alimentés par un réseau basse tension.

Un des buts de l'invention est donc de proposer une solution qui permette de s'affranchir des problèmes indiqués ci-dessus, tout en respectant les contraintes de performances qui sont nécessaires pour commander les thyristors.

### Exposé de l'invention

Ce but est atteint grâce à l'invention de la revendication indépendante 1.

Préférentiellement, le capteur est un tore de Rogowski entourant une phase et la carte de détection est placée à proximité immédiate du capteur.

Selon une autre caractéristique, le moteur est un moteur triphasé et le système de démarrage comprend trois interrupteurs électroniques de commutation commandés par le circuit de commande pour piloter chaque phase du moteur.

Selon un mode de réalisation, le système de démarrage comporte trois capteurs entourant chaque phase de l'alimentation du moteur et fournissant trois signaux analogiques et comporte trois cartes de détection, chaque carte de détection étant connectée à un capteur et transmettant chacune un signal binaire au circuit de commande.

Selon un autre mode de réalisation, le système de démarrage comporte trois capteurs entourant chaque phase du moteur et fournissant trois signaux analogiques et une seule carte de détection commune, la carte de détection commune étant connectée aux trois capteurs et transmettant un seul signal binaire commun au circuit de commande, le signal binaire commun étant représentatif des changements de signe des trois signaux analogiques, ces changements de signe ne s'effectuant pas simultanément.

Selon un autre mode de réalisation, le système de démarrage comporte un seul capteur commun entourant l'ensemble des phases du moteur et une seule carte de détection, laquelle est connectée au capteur commun et transmet un seul signal binaire au circuit de commande.

La mise en œuvre de cette technologie de détection par capteur de type Rogowski permet de réaliser des déclenchements précis des thyristors en connaissant les passages les minima de tension aux bornes des thyristors, permettant ainsi de réduire drastiquement les contraintes électriques qui leur sont imposées. Elle est d'autant plus performante que la détection des passages à zéro de la dérivée du courant de phase est rapide et précise elle-même.

Avantageusement, la solution proposée ne nécessite pas de réaliser une conversion analogique/numérique puis une transmission optique d'une grandeur analogique numérisée ce qui introduirait un délai inacceptable pour les performances requises en terme de précision de la mesure et de retard. Il est en effet beaucoup plus simple de transmettre par fibre optique un signal binaire plutôt qu'un signal analogique numérisé.

### Brève description des figures

D'autres caractéristiques et avantages vont apparaître dans la description détaillée qui suit faite en regard des dessins annexés dans lesquels :
- la figure 1 représente un premier mode de réalisation d'un système de démarrage selon l'invention,
- les figures 2 et 3 montrent respectivement deux autres modes de réalisation,
- la figure 4 détaille un interrupteur électronique de commutation destiné à piloter une phase d'un moteur électrique.

### Description détaillée d'au moins un mode de réalisation

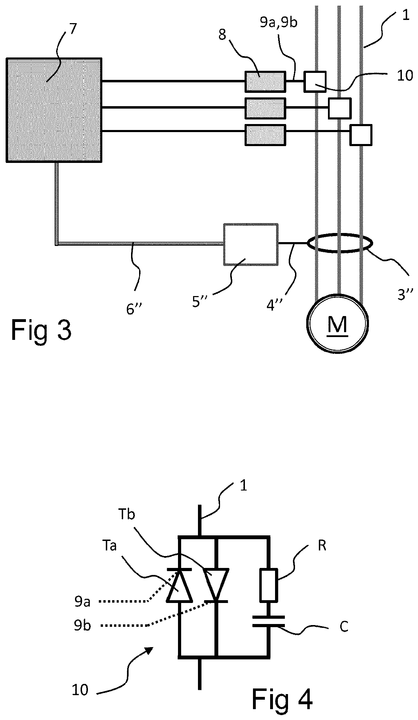

En référence à la figure 4, un interrupteur électronique 10 de commutation est branché sur une phase d'un réseau électrique alternatif 1 et comprend deux thyristors Ta, Tb montés tête-bêche en parallèle, ainsi qu'un circuit amortisseur RC (snubber) comportant une résistance R en série avec une capacité C. Le circuit amortisseur est relié en parallèle avec les thyristors Ta, Tb. A chaque alternance de la tension alternative du réseau 1, la gâchette des thyristors Ta, respectivement Tb, peut être commandée par un ordre de fermeture 9a, respectivement 9b. Lorsqu'aucun des thyristors Ta, Tb n'est conducteur, un courant transitoire peut circuler dans l'interrupteur 10 via le circuit amortisseur RC.

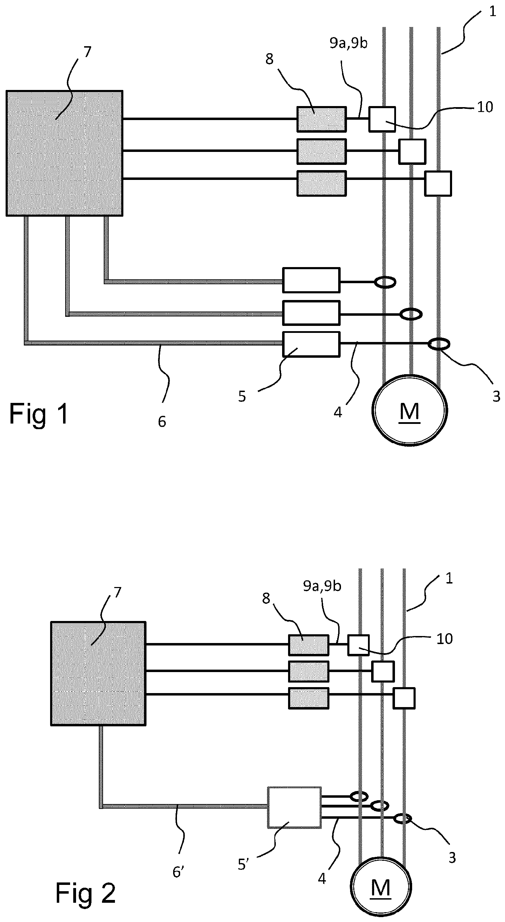

La figure 1 décrit un système de démarrage progressif d'un moteur électrique M triphasé alimenté par un réseau électrique 1 alternatif triphasé. Le système de démarrage comporte un interrupteur électronique 10 raccordé sur chaque phase du réseau électrique entre la source d'énergie du réseau et le moteur M. Le système de démarrage pilote les trois interrupteurs électroniques 10 de façon à faire varier progressivement la tension aux bornes du moteur M.

Le système de démarrage comporte un circuit de commande 7 qui est notamment chargé de commander les interrupteurs électroniques 10 en transmettant des ordres de fermeture 9a, 9b aux thyristors Ta, Tb, en fonction des consignes de commande. Le circuit de commande 7 comprend des éléments de contrôle (microprocesseur, DSP, FPGA,...) du système de démarrage et peut indifféremment être constitué d'un ou plusieurs modules distincts non représentés sur les figures. Il peut par exemple comporter un module d'interface isolée pour garantir la sécurité du matériel et des personnes qui auraient à intervenir sur un module de contrôle.

Pour des raisons de limitation d'impact des perturbations CEM, en particulier dans les applications haute tension, le système de démarrage comporte également des cartes électroniques 8 raccordées entre le circuit de commande 7 et les interrupteurs électroniques 10, et placées à proximité géographique immédiate des interrupteurs électroniques 10 pour transmettre les ordres 9a, 9b, lesquels peuvent alors être transmis par fibre optique.

Pour déterminer de façon optimale les instants de fermeture des thyristors Ta, Tb d'un interrupteur électronique 10, le système de démarrage comprend un capteur mesurant la dérivée du courant qui circule aux bornes de cet interrupteur. Comme expliqué précédemment, cette mesure de la dérivée du courant parcourant l'interrupteur électronique 10 peut avantageusement être utilisée pour synchroniser la commande des thyristors de cet interrupteur.

Préférentiellement, le capteur 3 est un tore de Rogowski qui entoure une phase du moteur M, entre l'interrupteur 10 et le moteur M, et qui fournit un signal analogique 4 représentatif de la dérivée d'un courant circulant dans la phase du moteur. Dans le mode de réalisation de la figure 1, le système de démarrage comprend trois tores de Rogowski 3, chaque tore entourant une phase du moteur triphasé M.

Selon l'invention, le système de démarrage comporte également une carte électronique de détection 5 qui reçoit le signal analogique 4 provenant du capteur 3 et qui est destinée à élaborer un signal binaire 6 représentatif des changements de signe du signal analogique 4, puis à transmettre ce signal binaire 6 au circuit de commande 7, de façon à optimiser les instants de commande de fermeture des thyristors de l'interrupteur électronique 10. La carte de détection 5 réalise les fonctions suivantes :
- Une première fonction dite «Instrumentation capteur». Cette fonction réalise la lecture du signal analogique 4 venant du capteur 3 au moyen d'une charge appropriée et un buffer réalise ensuite une adaptation d'impédance pour la connexion aux fonctions suivantes. Cette fonction réalise également la protection électrique de la carte de détection 5.
- Une deuxième fonction dite «Filtrage». Cette fonction sélectionne la bande de fréquence dans laquelle le signal analogique 4 utile se trouve. La bande passante de cette fonction est suffisamment grande pour permettre la détection d'un signal transitoire oscillant amorti de fréquence assez élevée vis-à-vis de la fréquence réseau, c'est-à-dire de l'ordre de 1 à 5 kHz.
- Une troisième fonction dite «Transformation». Cette fonction réalise la détection des changements de signe du signal analogique reçu de la deuxième fonction afin de créer un signal binaire qui est représentatif de ces différents changements de signe. La carte de détection 5 comporte donc des moyens de transformation du signal analogique reçu en un signal binaire (appelé aussi signal digital ou signal TOR - Tout Ou Rien) rectangulaire, dont les fronts coïncident avec les instants de passage par zéro du signal analogique. Ainsi, à chaque changement de signe du signal analogique, le signal binaire change de valeur, c'est-à-dire commute de la valeur 0 à 1 ou de la valeur 1 à 0.
- Une quatrième fonction dite «Transmission». La carte de détection 5 comporte des moyens de transmission qui transmettent le signal binaire 6 élaboré par les moyens de transformation à destination du circuit de commande 7.

Un premier avantage de cette solution est de décentraliser dans la carte de détection 5 une partie du traitement à réaliser, à savoir le traitement du signal analogique 4. Ceci allège d'autant le traitement à faire dans le circuit de commande 7 qui reçoit ainsi directement un signal binaire 6 prétraité.

De plus, dans le cas d'un moteur M alimenté par un réseau haute tension, les capteurs 3 sont installés autour des câbles du réseau 1, donc dans un environnement haute tension. Ils génèrent un signal analogique qui est théoriquement destiné à un circuit de commande 7 qui est dans un environnement basse tension. On risque donc d'avoir des perturbations (CEM) parce qu'on est dans un environnement dans lequel il y a des surtensions à fréquence élevée (générant des champs électriques perturbateurs) et parce que l'on a des courants comportant des taux d'harmoniques élevés (5, 7, ...) et des hautes fréquences générant des champs magnétiques lors de la commutation des thyristors.

Il faut donc limiter l'impact de ces perturbations CEM sur le fonctionnement du système de détection, du circuit de commande 7 et des moyens de transmission des passages à zéro du courant.

Pour cette raison, la carte de détection 5 est physiquement séparée du circuit de commande 7 et est placée à proximité immédiate du capteur 3, par exemple à une distance inférieure à 50 cm. Les moyens de transmission de la carte de détection 5 réalisent en plus une interface isolée grâce à un convertisseur électrique/optique qui convertit le signal binaire électrique en un signal binaire optique avant de le transmettre. Ce signal binaire optique 6 est ensuite envoyé par fibre optique au circuit de commande 7, lequel comporte bien entendu dans ce cas un convertisseur optique/électrique pour récupérer un signal binaire électrique utilisable.

Cette conversion électrique/optique du signal binaire garantit ainsi l'isolation galvanique entre d'une part le circuit de commande 7 et d'autre part la carte de détection 5 reliée au capteur 3. Ceci est particulièrement recommandé dans le cadre d'un système de démarrage destiné à commander un moteur haute tension.

Avantageusement, la solution proposée ne nécessite pas de réaliser une conversion analogique/numérique puis une transmission optique d'une grandeur analogique numérisée ce qui introduirait un délai inacceptable pour les performances requises en terme de précision de la mesure et de retard. Il est en effet beaucoup plus simple de transmettre par fibre optique un signal binaire plutôt qu'un signal analogique numérisé. De plus, les échanges d'information entre le circuit de commande 7 et la carte de détection 5 ne nécessitent pas la mise en œuvre d'une liaison avec protocole de communication qui ralentirait aussi ces échanges.

D'autres types d'isolation, comme une conversion du signal binaire électrique en un signal radio, pourraient également être envisageables. Cependant, une conversion électrique/optique permet une transmission temps réel très rapide et n'introduit qu'un délai très court (de l'ordre de 10µsec pour une conversion électrique/optique puis optique/électrique) qui n'est pas préjudiciable à la détermination précise des instants de fermeture des thyristors.

Dans le mode de réalisation de la figure 1, le système de démarrage comporte ainsi trois cartes de détection 5. Chaque carte de détection 5 correspond à une phase du moteur M et est placée à proximité immédiate du capteur 3 correspondant qui lui fournit un signal analogique 4.

Selon une variante présentée en figure 2, le système de démarrage ne comprend qu'une seule carte électronique de détection commune 5' qui est connectée aux trois capteurs 3 des trois phases du réseau électrique 1. Dans ce cas, un seul signal binaire commun 6' est créé et envoyé vers le circuit de commande 7, ce signal binaire commun 6' étant représentatif des changements de signe de l'ensemble des trois signaux analogiques 4 provenant des trois capteurs 3, ce qui est possible car les changements de signe ne s'effectuent pas simultanément.

Ce mode de réalisation est plus simple puisqu'il n'utilise qu'une seule carte de détection 5' et un seul signal binaire optique 6', donc un seul convertisseur électrique/optique dans la carte de détection 5' et un seul convertisseur optique/électrique dans le circuit de commande 7. Le fait de n'avoir qu'une seule carte de détection 5' permet aussi de n'avoir qu'une seule alimentation isolée à fournir pour alimenter cette carte 5'.

En contre partie, ce mode de réalisation nécessite un traitement du signal supplémentaire dans le circuit de commande 7 afin de déterminer à quelle phase du réseau correspond un changement de signe donné transmis par le signal binaire 6'. Ce traitement du signal peut par exemple se faire en prenant en compte l'information des différents courants circulant dans chaque phase, connue par ailleurs.

Selon une autre variante présentée en figure 3, le système de démarrage ne comprend qu'un seul tore de Rogowski commun 3" monté entre les interrupteurs 10 et le moteur M et entourant l'ensemble des trois phases du moteur M, ainsi qu'une seule carte de détection 5". Le tore de Rogowski commun 3' délivre donc un seul signal analogique 4" qui est représentatif de la dérivée des courants circulant dans l'ensemble des phases du moteur M. La carte de détection 5" reçoit le signal analogique 4" et transmet un seul signal binaire vers le circuit de commande 7. Cette solution simplifie encore la mise en œuvre et est plus économique car elle ne comprend qu'un seul tore de mesure, une seule carte de détection avec une seule alimentation isolée.

## Revendications

1. Système de démarrage d'un moteur électrique (M) alimenté par un réseau électrique (1) haute tension, le système de démarrage comprenant un circuit électronique de commande (7) et un interrupteur électronique (10) de commutation pour piloter une phase du moteur (M), l'interrupteur électronique (10) étant commandé par le circuit de commande (7), le système de démarrage comportant un capteur (3) destiné à fournir un signal analogique (4) représentatif de la dérivée d'un courant circulant dans la phase du moteur (M),
**caractérisé en ce que** le système de démarrage comporte une carte de détection (5) comprenant des moyens de transformation dudit signal analogique (4) en un signal binaire (6) représentatif des changements de signe dudit signal analogique, et comprenant des moyens de transmission dudit signal binaire au circuit de commande (7), les moyens de transmission convertissant d'abord le signal binaire électrique en un signal binaire optique (6) qui est transmis au circuit de commande (7) par fibre optique sans mise en œuvre d'un protocole de communication, le circuit de commande (7) reconvertissant ensuite le signal binaire optique (6) en un signal binaire électrique.

2. Système de démarrage selon la revendication 1, **caractérisé en ce que** la carte de détection (5) comprend également des moyens de filtrage du signal analogique (4).

3. Système de démarrage selon la revendication 1, **caractérisé en ce que** l'interrupteur électronique (10) comporte deux thyristors (Ta, Tb) montés en tête-bêche, en parallèle avec un circuit d'amortissement comprenant une résistance (R) en série avec et une capacité (C).

4. Système de démarrage selon la revendication 1, **caractérisé en ce que** le capteur est un tore de Rogowski (3) entourant la phase du moteur (M).

5. Système de démarrage selon la revendication 1, **caractérisé en ce que** la carte de détection (5) est placée à proximité immédiate du capteur (3), c'est-à-dire à une distance inférieure à 50 cm.

6. Système de démarrage selon la revendication 1, dans lequel le moteur (M) est un moteur triphasé, **caractérisé en ce que** le système de démarrage comprend trois interrupteurs électroniques (10) de commutation commandés par le circuit de commande (7) pour piloter chaque phase du moteur (M).

7. Système de démarrage selon la revendication 6, **caractérisé en ce qu'**il comprend trois capteurs (3) entourant chaque phase du moteur (M) et fournissant un signal analogique (4) pour chaque phase.

8. Système de démarrage selon la revendication 7, **caractérisé en ce qu'**il comprend trois cartes de détection (5), chaque carte de détection étant connectée à un capteur (3) et transmettant trois signaux binaires (6) au circuit de commande (7).

9. Système de démarrage selon la revendication 7, **caractérisé en ce qu'**il comprend une seule carte de détection commune (5'), la carte de détection commune étant connectée aux trois capteurs (3) et transmettant un seul signal binaire commun (6') au circuit de commande (7), le signal binaire commun (6') étant représentatif des changements de signe des trois signaux analogiques (4).

10. Système de démarrage selon la revendication 6, **caractérisé en ce qu'**il comprend un seul capteur commun (3") entourant l'ensemble des phases du moteur (M) et une seule carte de détection (5"), laquelle est connectée au capteur commun (3") et transmet un seul signal binaire (6") au circuit de commande (7).

## Patentansprüche

1. Anlasssystem eines Elektromotors (M), der durch ein elektrisches Hochspannungsnetz (1) mit Strom versorgt wird, wobei das Anlasssystem einen elektronischen Steuerkreis (7) und einen elektronischen Umschaltschalter (10) zum Ansteuern einer Phase des Motors (M) beinhaltet, wobei der elektronische Schalter (10) durch den Steuerkreis (7) gesteuert wird, wobei das Anlasssystem einen Sensor (3) umfasst, der dazu bestimmt ist, ein Analogsignal (4) bereitzustellen, das für die Ableitung eines in der Phase des Motors (M) fließenden Stroms repräsentativ ist, **dadurch gekennzeichnet, dass** das Anlasssystem eine Erfassungskarte (5) umfasst, die Mittel zum Umsetzen des Analogsignals (4) in ein Binärsignal (6), das für die Vorzeichenwechsel des Analogsignals repräsentativ ist, beinhaltet und die Mittel zum Übertragen des Binärsignals an den Steuerkreis (7) beinhaltet, wobei die Übertragungsmittel das elektrische Binärsignal zunächst in ein optisches Binärsignal (6) umwandeln, das ohne Einsatz eines Kommunikationsprotokolls über eine optische Faser an den Steuerkreis (7) übertragen wird, wobei der Steuerkreis (7) das optische Binärsignal (6) anschließend in ein elektrisches Binärsignal zurückwandelt.

2. Anlasssystem nach Anspruch 1, **dadurch gekennzeichnet, dass** die Erfassungskarte (5) auch Mittel zum Filtern des Analogsignals (4) beinhaltet.

3. Anlasssystem nach Anspruch 1, **dadurch gekennzeichnet, dass** der elektronische Schalter (10) zwei Thyristoren (Ta, Tb) umfasst, die zueinander entgegengesetzt und parallel zu einem Dämpfungskreis, der einen Widerstand (R) in Reihe mit einem Kondensator (C) beinhaltet, eingerichtet sind.

4. Anlasssystem nach Anspruch 1, **dadurch gekennzeichnet, dass** der Sensor eine Rogowskispule (3) ist, die die Phase des Motors (M) umgibt.

5. Anlasssystem nach Anspruch 1, **dadurch gekennzeichnet, dass** die Erfassungskarte (5) in direkter Nähe, das heißt in einem Abstand kleiner als 50 cm, zu dem Sensor (3) angeordnet ist.

6. Anlasssystem nach Anspruch 1, wobei der Motor (M) ein Dreiphasenmotor ist, **dadurch gekennzeichnet, dass** das Anlasssystem drei elektronische Umschaltschalter (10) beinhaltet, die durch den Steuerkreis (7) gesteuert werden, um jede Phase des Motors (M) anzusteuern.

7. Anlasssystem nach Anspruch 6, **dadurch gekennzeichnet, dass** es drei Sensoren (3) beinhaltet, die jede Phase des Motors (M) umgeben und für jede Phase ein Analogsignal (4) bereitstellen.

8. Anlasssystem nach Anspruch 7, **dadurch gekennzeichnet, dass** es drei Erfassungskarten (5) beinhaltet, wobei jede Erfassungskarte mit einem Sensor (3) verbunden ist und drei Binärsignale (6) an den Steuerkreis (7) überträgt.

9. Anlasssystem nach Anspruch 7, **dadurch gekennzeichnet, dass** es eine einzige gemeinsame Erfassungskarte (5') beinhaltet, wobei die gemeinsame Erfassungskarte mit den drei Sensoren (3) verbunden ist und ein einziges gemeinsames Binärsignal (6') an den Steuerkreis (7) überträgt, wobei das gemeinsame Binärsignal (6') für die Vorzeichenwechsel der drei Analogsignale (4) repräsentativ ist.

10. Anlasssystem nach Anspruch 6, **dadurch gekennzeichnet, dass** es einen einzigen gemeinsamen Sensor (3"), der die Gesamtheit der Phasen des Motors (M) umgibt, und eine einzige Erfassungskarte (5"), die mit dem gemeinsamen Sensor (3") verbunden ist und ein einziges Binärsignal (6") an den Steuerkreis (7) überträgt, beinhaltet.

## Claims

1. Starter system for an electric motor (M) supplied by a high-voltage electrical network (1), the starter system comprising an electronic control circuit (7) and an electronic switch (10) for controlling one phase of the motor (M), the electronic switch (10) being controlled by the control circuit (7), the starter system comprising a sensor (3) intended to deliver an analogue signal (4) that is representative of the derivative of a current flowing through the phase of the motor (M),
**characterized in that** the starter system comprises a detection board (5) comprising means for transforming said analogue signal (4) into a binary signal (6) that is representative of the changes in sign of said analogue signal, and comprising means for transmitting said binary signal to the control circuit (7), the transmission means first converting the binary signal into an optical signal (6) which is transmitted to the control circuit (7) via optical fibre without using a communication protocol, the control circuit (7) then converting the binary optical signal (6) back to a binary electrical signal.

2. Starter system according to Claim 1, **characterized in that** the detection board (5) also comprises means for filtering the analogue signal (4).

3. Starter system according to Claim 1, **characterized in that** the electrical switch (10) comprises two thyristors (Ta, Tb) connected back to back and in parallel with a damping circuit comprising a resistor (R) in series with a capacitor (C).

4. Starter system according to Claim 1, **characterized in that** the sensor is a Rogowski torus (3) surrounding the phase of the motor (M).

5. Starter system according to Claim 1, **characterized in that** the detection board (5) is placed in the immediate proximity of the sensor (3), i.e. at a distance of less than 50 cm.

6. Starter system according to Claim 1, in which the motor (M) is a three-phase motor, **characterized in that** the starter system comprises three electronic switches (10) that are controlled by the control circuit (7) in order to control each phase of the motor (M).

7. Starter system according to Claim 6, **characterized in that** it comprises three sensors (3) surrounding each phase of the motor (M) and delivering an analogue signal (4) for each phase.

8. Starter system according to Claim 7, **characterized in that** it comprises three detection boards (5), each detection board being connected to a sensor (3) and transmitting three binary signals (6) to the control circuit (7).

9. Starter system according to Claim 7, **characterized in that** it comprises a single shared detection board (5'), the shared detection board being connected to the three sensors (3) and transmitting a single shared binary signal (6') to the control circuit (7), the shared binary signal (6') being representative of the changes in sign of the three analogue signals (4).

10. Starter system according to Claim 6, **characterized in that** it comprises a single shared sensor (3") surrounding the set of phases of the motor (M) and a single detection board (5"), which board is connected to the shared sensor (3") and transmits a single binary signal (6") to the control circuit (7).
